Europäisches Patentamt

European Patent Office

Office européen des brevets

(11) Publication number: **0 212 730 B1**

# EUROPEAN PATENT SPECIFICATION

(45) Date of publication of patent specification: **17.04.91**  (51) Int. Cl.⁵: **B01D 53/14, C01B 17/00**

(21) Application number: **86201349.7**

(22) Date of filing: **31.07.86**

(54) **Process for the removal of H2S from a sour gaseous stream.**

(30) Priority: **23.08.85 US 769198**

(43) Date of publication of application:
**04.03.87 Bulletin 87/10**

(45) Publication of the grant of the patent:
**17.04.91 Bulletin 91/16**

(84) Designated Contracting States:
**BE DE FR GB NL**

(56) References cited:
**EP-A- 0 055 497**
**EP-A- 0 086 919**
**US-A- 4 400 368**
**US-A- 4 414 194**

(73) Proprietor: **SHELL INTERNATIONALE RE-
SEARCH MAATSCHAPPIJ B.V.**
**Carel van Bylandtlaan 30**
**NL-2596 HR Den Haag(NL)**

(72) Inventor: **Fong, Howard Lam-Ho**
**1707 Creekside Drive**
**Sugarland Texas(US)**
Inventor: **Diaz, Zaida**
**12106 Meadow Lake**
**Houston Texas(US)**
Inventor: **Blytas, George Constantin**
**14323 Apple Tree**
**Houston Texas(US)**

(74) Representative: **Aalbers, Onno et al**
**P.O. Box 302**
**NL-2501 CH The Hague(NL)**

# Description

The presence of significant quantities of $H_2S$ in various sour industrial gaseous streams poses a persistent problem. Although various procedures have been developed to remove and recover this contaminant, most such processes are deficient, for a variety of reasons.

USA patent No. 4 400 368 discloses a process for the removal of $H_2S$ from a sour gaseous stream employing an aqueous reactant solution containing solubilized degradable coordination complexes of iron comprising

a) contacting the sour gaseous stream with aqueous reactant solution in a contacting zone at a temperature below the melting point of sulphur, the reactant solution containing solubilized coordination complex of Fe(III) with nitrilotriacetic acid and solubilized coordination complex of Fe(II) with nitrilotriacetic acid, under conditions to convert $H_2S$, producing a gaseous stream having reduced $H_2S$ content, and aqueous mixture containing solid sulphur and an increased concentration of solubilized coordination complex of Fe(II) with nitrilotriacetic acid;

b) removing aqueous mixture from the contacting zone;

c) removing sulphur from the aqueous mixture, which step is followed by or preceded by regenerating substantially sulphur-free aqueous mixture by contacting mixture to be regenerated with oxygen in a regeneration zone under conditions to convert solubilized coordination complex of Fe(II) with nitrilotriacetic acid in the mixture to solubilized coordination complex of Fe(III) with nitrilotriacetic acid and producing regenerated aqueous reactant solution; and

d) passing regenerated aqueous reactant solution from step d) to the contacting zone for use as aqueous reactant solution therein.

It has been found that the stability of some reactants employed is temperature dependent, i.e., if the temperature of the solutions is too high, some of the reactants tend to degrade or decompose. In particular, if temperatures above the melting point of sulphur are employed, some systems, such as particular iron complex systems, tend to decompose. It is an object of the present invention to provide a process which overcomes the above problem.

To this end the process for the removal of $H_2S$ from a sour gaseous stream employing an aqueous reactant solution containing solubilized degradable coordination complexes of iron according to the invention is characterized in that the molar ratio of the coordination complex of Fe(III) with nitrilotriacetic acid to the coordination complex of Fe(II) with nitrilotriacetic acid in the reactant solution of step a) is from 0.2 to 6, in that the molar ratio of the coordination complex of Fe(III) with nitrilotriacetic acid to the coordination complex of Fe(II) with nitrilotriacetic acid of the regenerated aqueous reactant solution is from 0.5 to 6, and in that removing sulphur from the aqueous mixture comprises removing from the aqueous mixture obtained in step b) a minor portion having an increased solid sulphur concentration, heating said minor portion having an increased sulphur concentration in an at least substantially oxygen free environment to a temperature sufficient to melt the sulphur to produce a solution of solubilized coordination complexes of iron with nitrilotriacetic acid containing molten sulphur, and separating molten sulphur-containing solution in an at least substantially oxygen-free separation zone at a temperature at or above the melting point of sulphur into an upper phase comprising substantially sulphur-free solution of solubilized coordination complexes of iron with nitrilotriacetic acid and a lower phase comprising molten sulphur, and recovering molten sulphur from said separation zone.

In a suitable embodiment removing sulphur from the aqueous mixture comprises introducing mixture having an increased sulphur concentration into an at least substantially oxygen-free separation zone containing an upper phase comprising a substantially sulphur-free solution of solubilized coordination complexes of iron with nitrilotriacetic acid, and a lower phase comprising molten sulphur, the temperature of the zone being maintained at a temperature sufficient to melt the sulphur added, and allowing the solid sulphur added to melt and become part of the lower phase.

Preferably step d) further comprises filtering the molten sulphur to produce substantially pure molten sulphur.

In the specification NTA will be used to refer to nitrilotriacetic acid. The coordination complex of iron with NTA is present in solution as solubilized species, for example, solubilized ammonium or alkali metal salts of the coordination complex. As used herein, the term "solubilized" refers to the dissolved coordination complex mentioned, whether as a salt of the aforementioned cations, or in some other form in which the coordination complex exists in solution. Suitably the ammonium salt is utilized. However, the invention may also be employed with more dilute solutions of the coordination complex, wherein the steps taken to present iron precipitation are not critical.

As noted, the regeneration of the reactant is acomplished by the utilization of oxygen, preferably as air. The oxygen will accomplish two functions, the oxidation of Fe(II) of the reactant to Fe(III), and the stripping of any dissolved gas from the mixture. The oxygen (in whatever form supplied) is supplied in a stoichiometric equivalent or excess with respect to the amount of the ammonium form of the coordination complex of Fe(II) with NTA present in the mixture. Preferably, the oxygen is supplied in an amount of from about 20 percent to about 300 percent excess.

As used herein, the term "oxygen" is not limited to "pure" oxygen, but includes air, air-enriched with oxygen, or other oxygen-containing gases.

The particular type of sour gaseous stream treated is not critical, the only practical limitation being the reactivity of the stream itself with the solution employed, as will be evident to those skilled in the art. Streams particularly suited to removal of $H_2S$ by the practice of the invention are, as indicated, naturally-occurring gases, recycled $CO_2$ used in enhanced oil recovery, synthesis gases, process gases, and fuel gases produced by gasification procedures, e.g., gases produced by the gasification of coal, petroleum, shale, tar sands, etc. Particularly preferred are coal gasification streams, natural gas streams, produced and recycled $CO_2$ streams, and refinery feedstocks composed of gaseous hydrocarbon streams, especially those streams of this type having a low ratio of $H_2S$ to $CO_2$, and other gaseous hydrocarbon streams. The term "hydrocarbon stream(s)", as employed herein, is intended to include streams containing significant quantities of hydocarbon (both paraffinic and aromatic), it being recognized that such streams contain significant "impurities" not technically defined as a hydrocarbon. Again, streams containing principally a single hydrocarbon, e.g., ethane, are eminently suited to the practice of the invention. Streams derived from the gasification and/or partial oxidation of gaseous or liquid hydrocarbon may be treated by the invention. The $H_2S$ content of the type of streams contemplated will vary extensively, but, in general, will range from about 0.005 percent to about 10 percent by volume. $CO_2$ content will also vary, but may range from about 0.1 percent to about 99.0 percent (or more) by volume. In this context, the invention may be used to remove $H_2S$ from various $CO_2$ streams, e.g., supercritical $CO_2$ streams. Obviously, the amounts of $H_2S$ and $CO_2$ present are generally not a limiting factor.

The temperatures employed in the contacting or absorption-contact zone are not generally critical, except that the reaction is carried out below the melting point of sulphur. In many commercial applications, such as removal of $H_2S$ from natural gas to meet pipeline specifications, absorption at ambient temperatures is desired, since the cost of refrigeration would exceed the benefits obtained due to increased absorption at the lower temperature. In general, temperatures of from 10 °C to 80 °C are suitable, and temperatures of from 20 °C to 60 °C are preferred. Total contact times will range from about 1 second to about 120 seconds, with contact times of 2 seconds to 60 seconds being preferred.

Similarly, in the regeneration or stripping zone or zones, temperatures may be varied widely. Preferably, the regeneration zone should be maintained at substantially the same temperature, or somewhat lower, as the contacting zone. In general, temperatures of from about 10 °C to 80 °C, preferably 20 °C to 50 °C may be employed. The pH in the regeneration zone is between 6.5 and 8.5 and the molar ratio of NTA to solubilized iron is between 1.0 and 1.5.

Pressure conditions in the contacting zone may vary widely, depending on the pressure of the gas to be treated. For example, pressures in the contacting zone may vary from 0.1 MPa up to 15 MPa or even 20 MPa. Pressures of from 0.1 MPa to about 10 MPa are preferred. In the regeneration zone, pressures may also be varied considerably, and will preferably range from about 0.1 MPa to about 0.3 or 0.4 MPa. Residence times for given volumes of admixture and oxygen will range from 10 minutes to 60 minutes, preferably from 20 minutes to 40 minutes. The pressure, fluid flow, and temperature relationships involved are well understood by those skilled in the art, and need not be detailed herein. Other conditions of operation for this type of reaction process are further described in US Patent No. 3,068,065 to Hartley et al, dated December 11, 1962. Preferably, the molar ratio of the nitrilotriacetic acid to total iron is from about 1.0 to 1.5. The process is preferably conducted continuously.

As indicated, the $H_2S$, when contacted, is rapidly converted in the process of the invention by the coordination complex of Fe(III) with NTA to solid elemental sulphur. The amount of coordination complex of Fe(III) with NTA supplied or employed in solution is an amount sufficient to reduce the $H_2S$ concentration or content of the stream to the desired level. If total or substantially total removal is desired, the total amount supplied will generally be on the order of at least about two mol per mol of $H_2S$. Ratios of from about 2 mol to about 15 mol of the coordination complex of Fe(III) with NTA per mol of $H_2S$ may be used, with ratios from about 2 mol per mol to about 5 mol of the coordination complex of Fe(III) with NTA per mol of $H_2S$ being preferred. The ratio of the coordination complex of Fe(III) with NTA to the coordination complex of Fe(II) with NTA present in solution will normally be less than about 6, and will normally range from about 0.2 to about 6, preferably about 0.5 to about 6.

The coordination complex containing solution will generally be supplied as an aqueous solution having a concentration of from about 0.1 molar to about 3 mol/l, and a concentration of about 0.5 to 1.5 mol/l is preferred. As mentioned, the total iron concentration of the solution, as the coordination complexes, is from about 0.01 percent to about 7 percent by weight, preferably 0.5 to about 7 percent by weight, based on the weight of solution and iron. As indicated, the solubilized iron coordination complexes with NTA may be formed in aqueous solution by the reaction of an appropriate salt, oxide, or hydroxide of iron and NTA, in the presence of alkali metal or ammonium ions, or with the ammonium or alkali metal salt.

The invention will now be described in more detail by way of example with reference to the accompanying drawings, wherein

Figure 1 shows schematically the embodiment of the invention wherein sulphur removal is accomplished in a separate step prior to regeneration; and

Figure 2 shows schematically the case where sulphur is removed in a separate step after regeneration.

All values are calculated or merely exemplary, and all flows, unless stated otherwise, are continuous.

Sour gas, e.g., natural gas containing about 0.5 percent $H_2S$, in line 1 enters a contacting zone in the form of contactor or absorber 2 into which also enters an aqueous mixture comprising an aqueous solution of 0.8 mol/1 of an ammonium form of a coordination complex of Fe(III) with NTA, which mixture also contains 0.2 mol of an ammonium form of a coordination complex of Fe(II) with NTA through line 21. The solution is produced by utilization of the reducing effect of the $H_2S$ in the gaseous stream. That is, the initial solution in the contactor 2 is an aqueous solution of 1 mol/l of the coordination complex of Fe(III) with NTA also containing enough added ammonium hydroxide to maintain the pH of the solution between 6.5 and 8.5. After startup, and reaction with the $H_2S$ in the gaseous stream, regeneration, described hereinafter, is controlled so that regeneration of the ammonium form of the coordination complex of Fe-(III) with NTA is not complete. Absorber or contactor 2 may be of any suitable type, such as a packed column or tray column, but is preferably a combination venturi-spray column system. Depending on the size of the gas stream, the $H_2S$ content, etc., more than one contacting zone may be employed, preferably in series. In any event, in the unit illustrated, the pressure of the feed gas is about 8.5 MPa (gauge), and the temperature of the aqueous mixture is about 45 °C. A contact time of about 120 seconds is employed in order to react all the $H_2S$. Purified or "sweet" gas leaves absorber 2 through line 3. The "sweet" gas is of a purity sufficient to meet standard requirements. In the mixture the $H_2S$ is converted to solid elemental sulphur by the ammonium form of the coordination complex of Fe(III) with NTA and the ammonium form of the coordination complex of Fe(III) with NTA is converted to the ammonium form of the coordination complex of Fe(II) with NTA. The aqueous mixture produced, containing elemental sulphur and additional ammonium form of the coordination complex of Fe(II) with NTA, is removed continuously, and sent through line 4 to a depressurization and degassing unit 5, which also serves as a sulphur concentration or thickening zone. Gas desorbed from the aqueous mixture is removed from unit 5 via line 17. A minor portion, e.g., 5 to 10 percent by volume of the mixture in the depressurization and degassing unit 5, and containing an increased sulphur concentration, is continuously withdrawn from the lower portion of the depressurization and degassing unit 5 and sent via line 6 to sulphur recovery. The solid sulphur content of the portion removed should be as high as possible, although it is not necessary that all the solid sulphur particles be removed from the mixture. As those skilled in the art will recognize, the major portion may contain some quite minor quantities of sulphur, and such a circulating inventory does not interfere in the subsequent regeneration or in the contact zone. Other types of concentrators, such as a hydroclone, may be employed. The major portion of the aqueous mixture in the depressurization and degassing unit 5 is removed via line 7 for regeneration of solubilized coordination complex of Fe (III). In regeneration zone or column 8, the mixture is contacted with excess air from line 9 to convert part of the solubilized ferrous chelate to the solubilized ferric chelate.

Sulphur recovery is accomplished, as follows: The mixture in line 6 is passed through heat exchanger 10, e.g., a double pipe heat exchanger, and the temperature of the solution is raised to 120 °C, thus melting the sulphur in the mixture. The molten sulphur-containing mixture is then passed via line 11 to separator 12 wherein the mixture is separated into an upper solution (mixture) phase and a lower molten sulphur phase. Both the melting in the heat exchanger 10 and the separation in the separator 12 are carried out in the absence of oxygen. An inert head of nitrogen may be employed, if desired, in separator 12. Mixture or solution in the upper phase is withdrawn via line 13 and sent to regenerator 8. Total residence of the solution in the separator 12 should be minimized, e.g., 5 to 60 minutes, preferably 10 to 30 minutes. As those skilled in the art will recognize, the solution may be recovered and returned to any locus or point in the cycle, such as the contact zone, if appropriate adjustement is made. Molten sulphur is recovered from separator 12 via line 14 and preferably sent to filter or filters 15 where solid impurities such as carbonaceous matter or iron sulphide are removed. As will be recognized by those skilled in the art, separator 12, line 14, and filter(s) 15 will be heated or well insulated to prevent solidification of the sulphur. The separated molten sulphur is sent via line 16 to recovery or storage.

Regeneration zone 8 comprises a sparged tower regenerator with cocurrent upflow of oxygen (as air), supplied via line 9, and aqueous mixture. Air velocity in the regenerator is in the range of from 0.03 to 0.1 m/s. The temperature in the column is about 45 $^\circ$C, and overall pressure is about 0.2 MPa. Spent air is removed via line 20, and regenerated mixture, having a ratio of the ammonium form of the coordination complex of Fe(III) with NTA to the ammonium form of the coordination complex of Fe(II) with NTA of about 4 is returned via line 21 to contacting zone 2.

If required make-up reactant solution can be supplied via line 18.

In an alternative embodiment of the invention the mixture having an increased sulphur content in line 6 is directly introduced into separator 12 containing an upper phase of substantially sulphur-free solution of coordination complexes of iron with NTA and a lower phase comprising molten sulphur, wherein the lower zone is maintained at a temperature sufficient to melt the sulphur added by heating means (not shown). In this way heater 10 can be omitted.

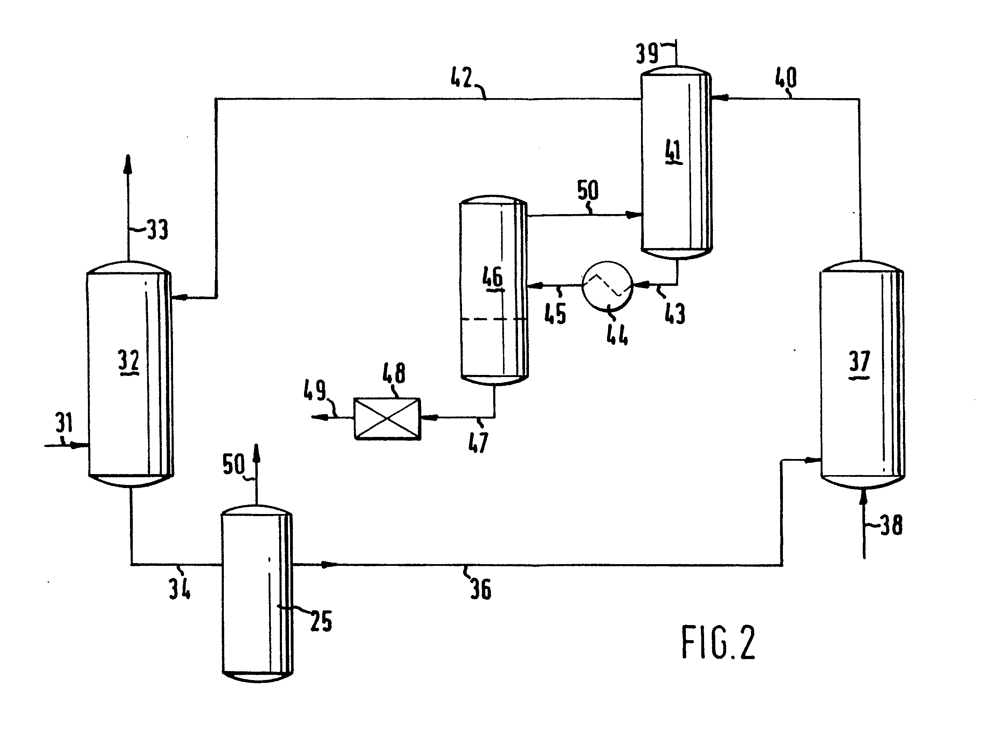

Reference is now made to Figure 2. Sour gas e.g., natural gas containing about 0.5 percent $H_2S$, and 32 percent by volume $CO_2$, in line 31 enters contacting zone 32 (sparged column type) and contacts an aqueous solution of 0.8 mol/l of an ammonium form of a coordination complex of Fe-(III) with NTA, also containing 0.2 mol/l of an ammonium form of an coordination complex of Fe(II) with NTA supplied via line 42. The pressure of the feed gas is about 8.5 MPa (gauge) and the temperature of the aqueous mixture is about 45 $^\circ$C. A contact time of about 45 seconds is employed in order to react all the $H_2S$. Purified or "sweet" gas leaves the contacting zone 32 through line 33. The "sweet" gas is of a purity sufficient to meet standard requirements. In the aqueous mixture, the $H_2S$ is converted to elemental sulphur by the ammonium form of the coordination complex of Fe(III) with NTA. The aqueous mixture, containing elemental sulphur, a slight amount of absorbed $CO_2$, and about 0.5 mol/l of the ammonium form of the coordination complex of Fe(II) with NTA, is removed continuously and sent through line 34 to degassing unit 25. As shown, any dissolved gases are removed in degassing unit 25 by reduction of pressure via line 50, and the mixture forwarded via line 36 to regeneration zone 37.

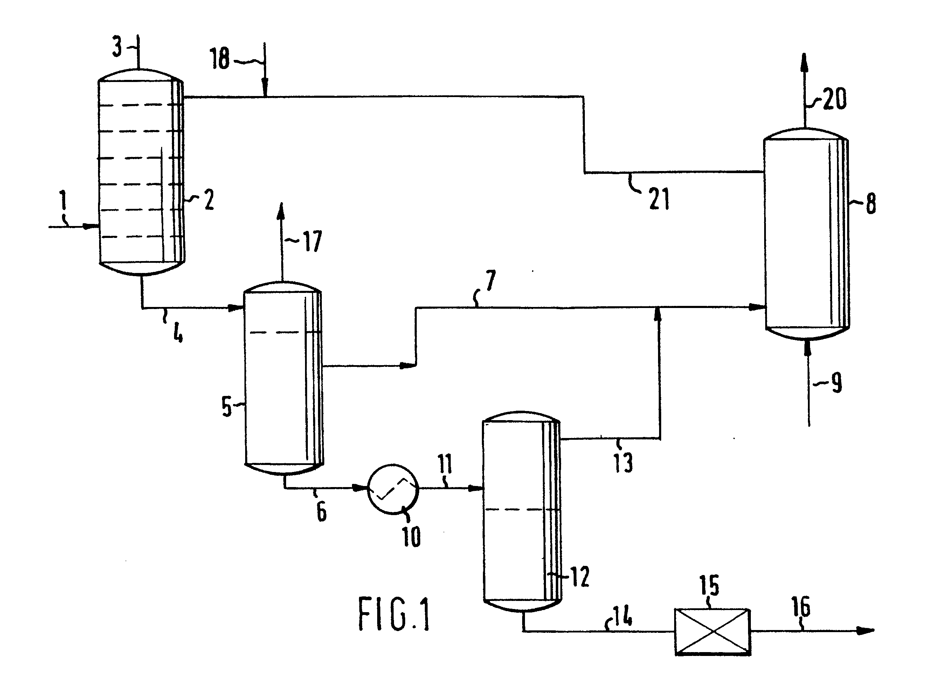

In regeneration zone 37, mixture is treated in a similar fashion to that described with reference to Figure 1. The ammonium form of the coordination complex of Fe(II) with NTA is converted by oxygen supplied via line 38 to the ammonium form of the coordination complex of Fe(III) with NTA, while maintaining sufficient of the ammonium form of the coordination complex of Fe(II) with NTA to inhibit degradation of the coordination complexes of iron with NTA. The temperature of the regeneration zone 37 is about 45 $^\circ$C, and the pressure in the column is maintained at about 0.2 MPa. The regenerated mixture, which still contains elemental sulphur and spent excess air, is sent through line 40 to degassing and thickening zone 41. Spent air is removed from zone 41 through line 39. From zone 41, which corresponds to depressurization and degassing unit 5 (see Figure 1), major and minor portions of the regenerated, solid sulphur-containing mixture are separated, the major portion being sent through line 42 to the contacting zone 32. The minor portion, e.g., 5 percent by volume of the mixture in zone 41, and having an increased sulphur content, is sent through line 43 to heat exchanger unit 44 and then via line 45 to separator 46 in the manner described in relation to Figure 1, in the absence of oxygen. Mixture from separator 46 is returned to zone 41 via line 50, and molten sulphur is removed from the separator 46 via line 47, and is preferably filtered in filter(s) 48 to provide sulphur in line 49.

While the invention has been illustrated with particular apparatus, those skilled in the art will appreciate that, except where specified, other equivalent or analogous units may be employed. The term "zones", as employed in the specification and claims, includes, where suitable, the use of segmented equipment operated in series, or the division of one unit into multiple units because of size constraints, etc. For example, a contacting zone may comprise two separate countercurrent columns in which the solution from the lower portion of the first column would be introduced into the upper portion of the second column, the partially purified gaseous material produced from the upper portion of the first column being fed into the lower portion of the second column. Parallel operation of units, is, of course, well within the scope of the invention. Mixture or solution withdrawal or introduction may be made at any suitable site(s) or loci in the particular zone.

Again, as will be understood by those skilled in the art, the solutions or mixtures employed may further contain other materials or additives for given purposes. For example, US Patent No. 3,933,993 discloses the use of buffering agents, such as phosphate and carbonate buffers. Similarly, other additives, such as sodium oxalate, sodium formate, sodium thiosulphate and sodium acetate, which are beneficial, and other additives, such as antifoaming and/or wetting agents, may be employed.

## Claims

1. Process for the removal of H₂S from a sour gaseous stream employing an aqueous reactant solution containing solubilized degradable coordination complexes of iron comprising

a) contacting the sour gaseous stream with aqueous reactant solution in a contacting zone at a temperature below the melting point of sulphur, the reactant solution containing solubilized coordination complex of Fe(III) with nitrilotriacetic acid and solubilized coordination complex of Fe(II) with nitrilotriacetic acid, under conditions to convert H₂S, producing a gaseous stream having reduced H₂S content, and aqueous mixture containing solid sulphur and an increased concentration of solubilized coordination complex of Fe(II) with nitrilotriacetic acid;

b) removing aqueous mixture from the contacting zone;

c) removing sulphur from the aqueous mixture, which step is followed by or preceded by regenerating substantially sulphur-free aqueous mixture by contacting mixture to be regenerated with oxygen in a regeneration zone under conditions to convert solubilized coordination complex of Fe(II) with nitrilotriacetic acid in the mixture to solubilized coordination complex of Fe(III) with nitrilotriacetic acid and producing regenerated aqueous reactant solution; and

d) passing regenerated aqueous reactant solution from step d) to the contacting zone for use as aqueous reactant solution therein, characterized in that the molar ratio of the coordination complex of Fe(III) with nitrilotriacetic acid to the coordination complex of Fe(II) with nitrilotriacetic acid in the reactant solution of step a) is from 0.2 to 6, in that the molar ratio of the coordination complex of Fe(III) with nitrilotriacetic acid to the coordination complex of Fe(II) with nitrilotriacetic acid of the regenerated aqueous reactant solution is from 0.5 to 6, and in that removing sulphur from the aqueous mixture comprises removing from the aqueous mixture obtained in step b) a minor portion having an increased solid sulphur concentration, heating said minor portion having an increased sulphur concentration in an at least substantially oxygen free environment to a temperature sufficient to melt the sulphur to produce a solution of solubilized coordination complexes of iron with nitrilotriacetic acid containing molten sulphur, and separating molten sulphur-containing solution in an at least substantially oxygen-free separation zone at a temperature at or above the melting point of sulphur into an upper phase comprising substantially sulphur-free solution of solubilized coordination complexes of iron with nitrilotriacetic acid and a lower phase comprising molten sulphur, and recovering molten sulphur from said separation zone.

2. Process as claimed in claim 1, characterized in that recovering molten sulphur from said separation zone further comprises filtering the molten sulphur to produce substantially pure molten sulphur.

## Revendications

1. Procédé pour l'élimination de H₂S à partir d'un courant gazeux acide en utilisant une solution aqueuse de réactif renfermant des complexes de coordination du fer, dégradables et solubilisés, comprend les opérations consistant à :

a) mettre en contact le courant gazeux acide avec une solution aqueuse de réactif dans une zone de contact à une température au-dessous du point de fusion du soufre, la solution de réactif renfermant un complexe de coordination solubilisé du Fe(III) avec de l'acide nitrilotriacétique et un complexe de coordination solubilisé du Fe(II) avec l'acide nitriloacétique, sous des conditions de conversion de H₂S, en obtenant un courant gazeux présentant une teneur réduite en H₂S, et un mélange aqueux renfermant du soufre solide et une concentration accrue de complexe de coordination solubilisé de Fe(II) avec l'acide nitrilotriacétique ;

b) éliminer le mélange aqueux de la zone de contact ;

c) éliminer le soufre du mélange aqueux, cette étape est suivie par ou précédée par une régénération du mélange aqueux pratiquement exempt de soufre en mettant en contact le mélange a regénérer avec de l'oxygène dans une zone de régénération sous des conditions pour transformer le complexe de coordination solubilisé du Fe(II) avec l'acide nitrilotriacétique dans le mélange en complexe de coordination solubilisé du Fe(III) avec l'acide nitrilotriacétique ; et

d) transférer la solution aqueuse régénérée de réactif de l'étape d) à la zone de contact pour l'utiliser in situ comme solution aqueuse de réaction, et obtenir la solution régénérée du réactif aqueux, caractérisé en ce que le rapport molaire du complexe de coordination du Fe(III) avec l'acide nitrilotriacétique au complexe de coordination du Fe(II) avec l'acide nitrilotriacétique dans la solution de réactif de l'étape a) est de 0,2 à 6, en ce que le rapport molaire du complexe de coordination du Fe(III) avec l'acide nitrilotriacétique au complexe de coordination du Fe(II) avec l'acide nitrilotriacétique de la solution régénérée aqueuse de réactif est de 0,5 à 6, et que l'élimination du soufre du mélange aqueux comprend les operations consistant à éliminer du mélange aqueux obtenu à l'étape b) une petite portion présentant une concentration accrue en soufre solide, à chauffer cette petite portion présentant une concentration accrue en soufre dans au moins un environnement pratiquement exempt d'oxygène jusqu'à une température suffisante pour fondre le soufre et obtenir une solution de complexes de coordination solubilisés de fer avec l'acide nitrilotriacétique renfermant du soufre fondu, et à séparer la solution renfermant du soufre fondu dans au moins une zone de séparation pratiquement exempte d'oxygène à une température égale ou supérieure au point de fusion du soufre dans une phase supérieure constituée de la solution pratiquement exempte de soufre des complexes de coordination solubilisés du fer avec l'acide nitrilotriacétique et une phase inférieure comportant du soufre fondu, et à récupérer le soufre fondu de ladite zone de séparation.

2. Procédé tel que revendiqué dans la revendication 1, caractérisé en ce que la récupération du soufre fondu à partir de la zone de séparation comporte en outre la filtration du soufre fondu pour obtenir du soufre fondu pratiquement pur.

**Ansprüche**

1. Verfahren zum Entfernen von $H_2S$ aus einem sauren Gasstrom unter Verwendung einer wäßrigen Reagenzlösung, enthaltend solubilisierte abbaubare Koordinationskomplexe von Eisen, welches Verfahren die Stufen umfaßt

   a) Kontaktieren des sauren Gasstromes mit einer wäßrigen Reagenzlösung in einer Kontaktierzone bei einer Temperatur, die unterhalb des Schmelzpunktes von Schwefel liegt, wobei die Reagenzlösung einen solubilisierten Koordinationskomplex von Fe(III) mit Nitrilotriessigsäure und einen solubilisierten Koordinationskomplex von Fe(II) mit Nitrilotriessigsäure enthält, unter für die Umwandlung von $H_2S$ geeigneten Bedingungen, und Herstellung eines Gasstromes mit reduziertem H S-Gehalt und einer wäßrigen Mischung, enthaltend festen Schwefel und eine erhöhte Konzentration an solubilisiertem Koordinationskomplex von Fe(II) mit Nitrilotriessigsäure;

   b) Entfernen der wäßrigen Mischung aus der Kontaktierzone

   c) Entfernen des Schwefels aus der wäßrigen Mischung, vor welcher Stufe oder nach welcher Stufe eine Regenerierung von im wesentlichen schwefelfreier Mischung erfolgt, und zwar durch Kontaktieren der zu regenerierenden Mischung mit Sauerstoff in einer Regenerationszone unter Bedingungen, die dazu geeignet sind, einen solubilisierten Koordinationskomplex von Fe(II) mit Nitrilotriessigsäure in der Mischung zu einem solubilisierten Koordinationskomplex von Fe(III) mit Nitrilotriessigsäure umzuwandeln und Herstellung der regenerierten wäßrigen Reagenzlösung; und

   d) Leiten der regenerierten wäßrigen Reagenzlösung aus Stufe d) in die Kontaktierzone zur Verwendung als wäßrige Reagenzlösung in dieser,

dadurch gekennzeichnet, daß das molare Verhältnis des Koordinationskomplexes von Fe(III) mit Nitrilotriessigsäure zum Koordinationskomplex von Fe(II) mit Nitrilotriessigsäure in der Reagenzlösung von Stufe a) von 0,2:1 bis 6:1 beträgt, daß das molare Verhältnis des Koordinationskomplexes von Fe(III) mit Nitrilotriessigsäure zum Koordinationskomplex von Fe(II) mit Nitrilotriessigsäure der regenerierten wäßrigen Reagenzlösung von 0,5:1 bis 6:1 beträgt, und daß das Entfernen von Schwefel aus der wäßrigen Mischung das Entfernen eines kleineren Anteils mit erhöhter Konzentration an festem Schwefel aus der in Stufe b) erhaltenen wäßrigen Mischung, das Erhitzen dieses kleineren Anteils mit erhöhter Schwefelkonzentration in einem zumindest im wesentlichen sauerstofffreien Milieu auf eine Temperatur, die ausreicht, den Schwefel zu schmelzen, zwecks Herstellung einer geschmolzenen Schwefel enthaltenden Lösung aus solubilisierten Koordinationskomplexen von Eisen mit Nitrilotriessigsäure, und das Auftrennen der geschmolzenen Schwefel enthaltenden Lösung in einer zumindest im wesentlichen sauerstofffreien Trennzone bei einer Temperatur um oder über dem Schmelzpunkt von Schwefel in eine obere Phase, umfassend eine im wesentlichen schwefelfreie Lösung aus solubilisierten Koordinationskomplexen von Eisen mit Nitrilotriessigsäure und in eine untere Phase, umfassend geschmolzenen Schwefel, und das Wiedergewinnen von geschmolzenem Schwefel aus der besagten Trennzone umfaßt.

2. Verfahren wie in Anspruch 1 beansprucht, dadurch gekennzeichnet, daß das Wiedergewinnen des geschmolzenen Schwefels aus der besagten Trennzone außerdem das Filtern des geschmolzenen Schwefels zur Herstellung eines im wesentlichen reinen geschmolzenen Schwefels umfaßt.

FIG.1

EP 0 212 730 B1

FIG.2